# FASCICULE DE BREVET EUROPEEN

(11) **EP 0 544 553 B1**
(45) Date de publication et mention de la délivrance du brevet: **02.11.1995**
(21) Numéro de dépôt: 92403017.4
(22) Date de dépôt: 09.11.1992
(51) Int. Cl.: B32B 5/18, B32B 5/24, B32B 17/12

(54) **Matériau composite thermostructural isolant de faible densité et procédé de réalisation d'un tel matériau sandwich-verre**
Isolierendes hitzebeständiges Verbundmaterial niedriger Dichte und Verfahren zur Herstellung eines solchen Glas-Sandwich Materials
Low density insulating thermostructural composite material and process for making such glass sandwich material

(30) Priorité: 26.11.1991 FR 9114551
(43) Date de publication de la demande: 02.06.1993
(73) Titulaire: AEROSPATIALE Société Nationale Industrielle, 75781 Paris Cédex 16 (FR)
(72) Inventeur: Bayle, Colette, F-33160 St. Medard en Jalles (FR); Marceau, Nicolas, Résidence Clos Montfort, F-33160 St. Medard en Jalles (FR)
(74) Mandataire: Lhuillier, René

(56) Documents cités:
- EP-A- 0 196 949
- EP-A- 0 404 632
- FR-A- 2 655 327

## Description

L'invention concerne un matériau composite thermostructural isolant de faible densité et plus précisément d'un sandwich SiC-verre-mousse de verre ainsi que son procédé de fabrication.

Il existe des matériaux structuraux composites uni ou bidirectionnels formés à partir de fibres de SiC et une matrice verre, obtenus par imprégnation d'une préforme fibreuse au moyen d'une barbotine contenant les éléments nécessaires à l'obtention de la composition vitreuse désirée, puis sèchage de la préforme ainsi imprégnée. Puis on empile et solidarise entre eux par chauffage modéré des préimprégnés séchés pour obtenir des composites à renfort mono ou bidirectionnels de grandes tailles, cette préforme étant enfin densifiée au moyen d'une étape de compression à chaud à une température préférentielle de 1000 à 1200°C comme décrit dans le FR.A. 2 648 806. On connaît aussi des compositions vitrocéramiques obtenues par la voie sol-gel, présentant un faible coefficient de dilatation thermique et qui supportent sans dommage des variations de températures importantes et rapides. Dans le FR-A 2 655 327 est notamment décrite une composition vitrocéramique ayant pour composants principaux SiO₂, Al₂O₃ et LiO₂ ou MgO obtenus par voie sol-gel à partir d'alcoolates de silicium et d'aluminium et de composés de lithium ou de magnésium, ladite composition étant essentiellement sous forme de solutions solides céramiques dont le faible coefficient de dilatation est favorable à la formation de matériaux composites ayant de bonnes caractéristiques thermo-mécaniques.

Les matériaux structuraux évoqués précédemment trouvent - du fait de leur qualité - des applications avantageuses dans les domaines aéronautiques et spatiaux. Ils ne sont toutefois pas performants sur le plan de l'isolation phonique et thermique. Des matériaux isolants thermiques et phoniques sont connus par ailleurs. On peut citer à ce sujet des mousses de verre à base d'aluminosilicate à structure expansée tels que décrits dans le FR-A 2 578 828. Cet aluminosilicate au moins partiellement cristallisé résulte de l'oxydation par l'air de nitrure à base d'aluminium, conduisant à un produit expansé à pores fermés renfermant de l'azote. Ce matériau est imperméable à l'eau, il présente une bonne résistance vis à vis des agents chimiques et constitue un bon isolant thermique. Par contre il n'a que de médiocres qualités structurales.

Aucun de tous ces produits ne réunit cependant toutes les qualités requises pour pouvoir réaliser des structures porteuses de haute résistance et de faible poids, aptes à la fabrication de panneaux notamment pour aéronefs et véhicules spatiaux qui doivent impérativement présenter des caractéristiques performantes simultanément de résistance mécanique, d'isolation thermique, d'isolation phonique et de neutralité chimique, et cela à haute température soit jusqu'à environ 1000°C.

Il serait certes possible de combiner des matériaux structuraux composites et des matériaux isolants thermiques et phoniques et d'obtenir ainsi une structure sandwich présentant les caractéristiques recherchées. Par exemple en tapissant les parois d'un moule de peaux de SiC/verre densifiées et en introduisant à l'intérieur un mélange de poudre de verre-nitrure d'aluminium comme l'enseigne le FR-A 2 578 828, on obtiendrait après un traitement thermique approprié une mousse de verre expansée liée aux parois. L'expansion de la mousse exerce une pression sur les parois du moule qui favorise la liaison avec les peaux de SiC/verre. Cette solution qui peut paraître séduisante, comporte toutefois des inconvénients qui sont apparus suffisants à la Demanderesse pour lui faire rechercher un autre matériau et un autre procédé. Ces inconvénients sont dus essentiellement aux difficultés rencontrées pour manipuler la poudre de verre et de nitrure d'aluminium, pour réaliser les moules même s'il s'agit d'obtenir des plaques planes, et pour faire expanser la mousse de verre en vue d'obtenir des pièces de faible épaisseur et de grand élancement.

L'invention a donc pour objet un matériau composite isolant formé à partir de fibres de carbure de silicium avec une matrice verre et une mousse de verre qui est constitué d'une alternance d'au moins deux peaux à matrice verre préalablement usinées et d'au moins un pain de mousse de verre expansée, qui forment une structure sandwich obtenue par liaison verrière dans laquelle il y a eu migration des éléments chimiques contenus dans les verres des différentes couches au niveau de leurs interfaces.

L'invention a également pour objet principal un procédé de réalisation d'un matériau composite isolant qui consiste :
- à disposer sur un support rigide une peau à matrice verre,
- à mettre en place sur ladite peau une mousse de verre expansée dont la forme et l'épaisseur correspondent à celles de la pièce finale recherchée,
- à recouvrir la mousse d'une autre peau à matrice verre,
- à placer sur le tout une contreforme rigide,
- à appliquer sur l'ensemble une pression mécanique uniformément répartie,
- à disposer l'ensemble dans un four et lui faire subir un chauffage sous air à pression atmosphérique selon un cycle spécifique de montée en température suivie d'un refroidissement,
- à retirer les éléments de maintien en pression.

Principalement le cycle spécifique de chauffage consiste :
- à assurer la montée de la température ambiante au-delà de la température de transition vitreuse,
- à maintenir un palier de chauffage d'une durée déterminée à cette température maximum,
- à assurer un refroidissement lent jusqu'à 500°C,
- puis à effectuer un refroidissement rapide de 500°C à la température ambiante par ouverture du four.

Avantageusement la vitesse de montée et la vitesse de descente en température sont de l'ordre de 500°C/heure et le palier de chauffage à la température maximum est de l'ordre de 15 minutes.

D'autres caractéristiques particulières et avantages de l'invention apparaîtront à la lecture de la description suivante dans laquelle il est fait référence aux dessins annexés qui représentent :
figure 1 une vue schématique en coupe de l'élaboration d'un matériau composite thermostructural ;
figure 2 une vue en coupe d'une structure sandwich SiC/verre-mousse de verre obtenue par le procédé ;
figure 3 une variante de réalisation de la figure 1.

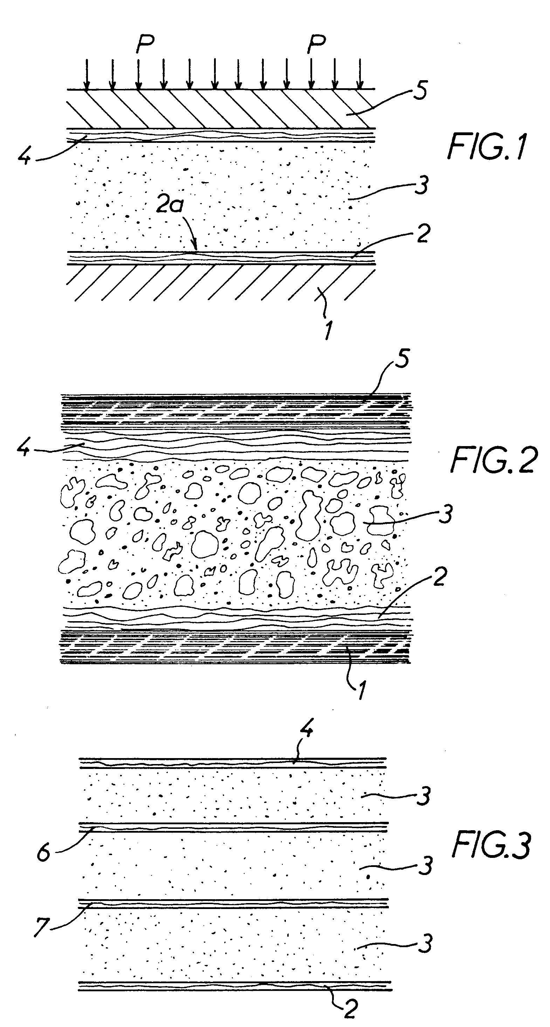

La figure 1 illustre la structure sandwich obtenue par le procédé. Sur un support rigide 1 on dispose une peau 2 de SiC/verre densifiée obtenue de façon connue et qui a subi une rectification préalable lui conférant un bon état de surface. Cette rectification a été effectuée sur la face supérieure 2a de la peau 2. Par dessus cette dernière on met en place une mousse de verre expansée 3 dont la forme et l'épaisseur correspondent à la forme de la pièce finale recherchée, moins l'épaisseur des peaux. Cette mousse est usinée en surface et les porosités sont ouvertes. La mousse 3 est a son tour recouverte d'une peau 4 de nature identique à la première, également rectifiée sur sa face inférieure. On place par dessus le tout une contreforme rigide 5 sur laquelle on applique à l'ensemble une pression mécanique P uniformément répartie. On dispose ensuite cet ensemble dans un four puis on effectue un chauffage sous air à pression atmosphérique suivant le cycle spécifique suivant.
- Montée de la température ambiante au delà de la température de transition vitreuse à une vitesse de montée de 500°C/heure.
- Puis palier de 15 minutes à la température maximum.
- Ensuite refroidissement lent jusqu'à 500°C (par exemple descente de 500°C/heure).
- Enfin refroidissement rapide de 500°C à la température ambiante par ouverture du four.

A la suite de ce cycle, on peut retirer les éléments de maintien en pression.

Les paramètres pression, température et temps sont ajustés afin de ne pas dégrader la mousse et le composite SiC/verre. On notera que la température atteinte dans le four est de 800 à 900°C pour une structure sandwich composée de peaux de type Sic/verre.

Grâce à ce procédé on obtient une excellente liaison verrière entre la mousse de verre 3 et les peaux 2, 4. On a représenté à la figure 2 un sandwich ainsi obtenu constitué d'une alternance de peaux de SiC/verre et d'un pain de mousse de verre expansé dans lequel les trois couches sont bien visibles. La température de palier qui, comme on l'a vu est supérieure à la température de transition vitreuse des matériaux en présence permet une migration des éléments chimiques contenus dans les différentes couches au niveau de leurs interfaces. Le palier de 15 minutes est nécessaire et suffisant pour que la température de l'ensemble soit homogène et pour garantir la liaison verrière, sans dégradation par effondrement de la mousse. La mousse peut être amenée à une température d'environ 50% au-dessus de sa température de transition vitreuse, sans subir de dégradation. On voit bien la mousse expansée 3 et ses pores, parfaitement liée à la peau fibrée 4.

La figure 3 illustre une autre forme de pièce obtenue dans laquelle plusieurs peaux intermédiaires 6, 7 sont prévues en plus des peaux extérieures 2, 4. Entre ces peaux se trouvent intercalées des parties de mousse de verre expansée 3 aux formes et épaisseurs voulues qui forment avec les peaux un sandwich multiple.

L'invention ne se limite pas aux pièces à faces planes et parallèles précédemment décrites mais englobe toute autre forme. Les supports sont donc adaptés aux formes recherchées, de même que les contre-formes qui supporteront les éléments de mise en pression. L'invention ne se limite pas non plus aux peaux SiC/verre, toute autre peau à matrice verre étant envisageable.

Les panneaux réalisés à l'aide de ces structures sandwichs présentent une rigidité comparable à celle d'un panneau métallique alvéolaire, mais avec de surcroît une garantie de tenue en température supérieure. On peut ainsi les utiliser aussi bien pour des structures porteuses d'aéronefs et de véhicules spatiaux que pour des éléments coupe-feu à haute résistance thermomécanique.

## Revendications

1. Matériau composite isolant présentant des caractéristiques performantes simultanément de résistance mécanique, d'isolation thermique, d'isolation phonique et de neutralité chimique, et formé à partir de fibres de carbure de silicium incorporées dans une matrice verre et d'une mousse de verre, caractérisé en ce qu'il est constitué d'une alternance d'au moins deux peaux (2,4,6,7) à matrice verre préalablement usinées et d'au moins un pain (3) de mousse de verre expansée, qui forment une structure sandwich obtenue par liaison verrière dans laquelle il y a eu migration des éléments chimiques contenus dans les verres des différentes couches au niveau de leurs interfaces.

2. Matériau composite selon la revendication 1, caractérisé en ce que les peaux (2,4,6,7) préalablement usinées sont des peaux de SiC/verre.

3. Procédé de réalisation d'un matériau composite isolant selon la revendication 1, caractérisé en ce qu'il consiste :
- à disposer sur un support rigide une peau à matrice verre ;
- à mettre en place sur ladite peau une mousse de verre expansée dont la forme et l'épaisseur correspondent à celles de la pièce finale recherchée ;
- à recouvrir la mousse d'une autre peau à matrice verre ;
- à placer sur le tout une contreforme rigide ;
- à appliquer sur l'ensemble une pression mécanique uniformément répartie ;
- à disposer l'ensemble dans un four et lui faire subir un chauffage sous air à pression atmosphérique selon un cycle spécifique de montée en température suivie d'un refroidissement ; et
- à retirer les éléments de maintien en pression.

4. Procédé de réalisation d'un matériau composite isolant selon la revendication 3, caractérisé en ce qu'il consiste :
- à disposer sur un support rigide une peau à matrice verre ;
- à mettre en place sur ladite peau une alternance de pains de mousse de verre expansée et de peaux à matrice verre ;
- à placer sur le tout une contreforme rigide ;
- à appliquer sur l'ensemble une pression mécanique uniformément répartie ;
- à disposer l'ensemble dans un four et lui faire subir un chauffage sous air à pression atmosphérique selon un cycle spécifique de montée en température suivie d'un refroidissement ; et
- à retirer les éléments de maintien en pression.

5. Procédé de réalisation selon les revendications 3 et 4, caractérisé en ce que le cycle spécifique de chauffage consiste :
- à assurer la montée de la température ambiante au-delà de la température de transition vitreuse ;
- à maintenir un palier de chauffage d'une durée déterminée à cette température maximum ;
- à assurer un refroidissement lent jusqu'à 500° C ;
- puis à effectuer un refroidissement rapide de 500° C à la température ambiante par ouverture du four.

6. Procédé de réalisation selon la revendication 5, caractérisé en ce que la vitesse de montée et la vitesse de descente en température sont de l'ordre de 500° C/heure.

7. Procédé de réalisation selon la revendication 5, caractérisé en ce que le palier de chauffage à la température maximum est de l'ordre de 15 minutes.

## Claims

1. Insulating composite material exhibiting high-performance characteristics, simultaneously, of mechanical resistance, thermal insulation, sound insulation and chemical neutrality, which composite material is made from silicon carbide fibres incorporated in a glass matrix and from glass foam, characterised in that it is constituted by an alternating arrangement of at least two glass matrix skins (2,4,6,7) that have been machined in advance and at least one cake (3) of expanded glass foam, which form a sandwich structure that is obtained by vitreous bonding in which there is migration of the chemical elements contained in the glasses of the different layers at the interfaces of those layers.

2. Composite material according to claim 1, characterised in that the skins (2,4,6,7) machined in advance are skins of SiC/glass.

3. Process for the manufacture of an insulating composite material according to claim 1, characterised in that it comprises:
- placing a glass matrix skin on a rigid support;
- placing on that skin an expanded glass foam, the shape and thickness of which correspond to those of the desired final piece;
- covering the foam with another glass matrix skin;
- placing on the assembly a rigid counterform;
- applying a uniformly distributed mechanical pressure to the assembly;
- placing the whole in an oven and subjecting it to heating under air at atmospheric pressure in accordance with a specific cycle of a rise in temperature followed by cooling; and
- removing the pressure-maintaining elements.

4. Process for the manufacture of an insulating composite material according to claim 3, characterised in that it comprises:
- placing a glass matrix skin on a rigid support;
- placing on that skin, in alternation, cakes of expanded glass foam and glass matrix skins;
- placing on the assembly a rigid counterform;
- applying a uniformly distributed mechanical pressure to the assembly;
- placing the whole in an oven and subjecting it to heating under air at atmospheric pressure in accordance with a specific cycle of a rise in temperature followed by cooling; and
- removing the pressure-maintaining elements.

5. Manufacturing process according to claims 3 and 4, characterised in that the specific cycle of heating comprises:
- raising the ambient temperature above the glass-transition temperature;
- maintaining a heating plateau of a determined duration at the maximum temperature;
- providing slow cooling to 500°C;
- then effecting rapid cooling from 500°C to ambient temperature by opening the oven.

6. Manufacturing process according to claim 5, characterised in that the rate of rise in temperature and the rate of fall in temperature are of the order of 500°C/hour.

7. Manufacturing process according to claim 5, characterised in that the heating plateau at the maximum temperature is of the order of 15 minutes.

## Patentansprüche

1. Isolierender Verbundwerkstoff, der Hochleistungseigenschaften zugleich hinsichtlich mechanischer Festigkeit, thermischer Isolation, Schallisolation und chemischer Neutralität aufweist und auf der Grundlage von Siliciumkarbidfasern, die in einer Glasmatrix eingebaut sind, und eines Glasschaumsstoffes gebildet ist, dadurch gekennzeichnet, daß er aus einer Wechselfolge von wenigstens zwei zuvor bearbeiteten Häuten (2, 4, 6, 7) aus einer Glasmatrix und wenigstens einer Masse (3) aus aufgeschäumtem Glasschaumstoff besteht, die eine durch eine glasartige Verbindung erzielte Sandwich-Struktur bilden, in der eine Migration von chemischen Elementen, die in den Gläsern der verschiedenen Schichten enthalten sind, zur Ebene ihrer Grenzflächen stattgefunden hat.

2. Verbundwerkstoff nach Anspruch 1, dadurch gekennzeichnet, daß die zuvor bearbeiteten Häute (2, 4, 6, 7) Häute aus SiC/Glas sind.

3. Vefahren zur Herstellung eines isolierenden Verbundwerkstoffs nach Anspruch 1, dadurch gekennzeichnet, daß es folgendes beinhaltet:
- Anordnen einer Haut aus einer Glasmatrix auf einem starren Träger;
- Anbringen eines aufgeschäumten Glasschaumstoffs auf der Haut, dessen Gestalt und Dicke denjenigen des endgültigen gesuchten Stückes entsprechen;
- Überziehen des Schaumstoffes mit einer weiteren Haut aus einer Glasmatrix;
- Anordnen einer starren Gegenform auf dem Ganzen;
- Anwenden eines gleichmäßig verteilten mechanischen Druckes auf den Komplex;
- Anordnen des Komplexes in einen, Ofen und Bewirken, daß er eine Erwärmung an Luft unter Atmosphärendruck gemäß einem speziellen Zyklus zur Anhebung der Temperatur gefolgt von einer Abkühlung erfährt; und
- Entfernen der Elemente zur Aufrechterhaltung des Drucks.

4. Verfahren zur Herstellung eines isolierenden Verbundwerkstoffs nach Anspruch 3, dadurch gekennzeichnet, daß es folgendes beinhaltet:
- Anordnen einer Haut aus einer Glasmatrix auf einem starren Träger;
- Anbringen einer Wechselfolge von Massen aus aufgeschäumtem Glasschaumstoff und von Häuten aus einer Glasmatrix auf der Haut;
- Anordnen einer starren Gegenform auf dem Ganzen;
- Anwenden eines gleichmäßig verteilten mechanischen Drucks auf den Komplex;
- Anordnen des Komplexes in einem Ofen und Bewirken, daß er eine Erwärmung an Luft unter Atmosphärendruck gemäß einem speziellen Zyklus zur Anhebung der Temperatur gefolgt von einer Abkühlung erfährt; und
- Entfernen der Elemente zur Aufrechterhaltung des Drucks.

5. Herstellungsverfahren nach den Ansprüchen 3 und 4, dadurch gekennzeichnet, daß der spezielle Zyklus zur Erwärmung aus folgendem besteht:
- Sicherstellen, daß die Umgebungstemperatur über die Glasübergangstemperatur hinaus angehoben wird;
- Aufrechterhalten einer Erwärmungsstufe während einer vorgegebenen Dauer auf dieser maximalen Temperatur;
- Sicherstellen einer langsamen Abkühlung bis auf 500°C;
- dann Ausführen einer schnellen Abkühlung von 500°C auf die Umgebungstemperatur durch Öffnen des Ofens.

6. Herstellungsverfahren nach Anspruch 5, dadurch gekennzeichnet, daß die Geschwindigkeit des Anhebens und die Geschwindigkeit des Absenkens der Temperatur in der Größenordnung von 500° C/Stunde liegen.

7. Herstellungsverfahren nach Anspruch 5, dadurch gekennzeichnet, daß die Erwärmungsstufe auf die maximale Temperatur in der Größenordnung von 15 Minuten liegt.
